(19) **Europäisches Patentamt**

**European Patent Office**

**Office européen des brevets**

(11) **EP 1 426 390 B1**

(12) **EUROPEAN PATENT SPECIFICATION**

(45) Date of publication and mention
of the grant of the patent:
**31.05.2006 Bulletin 2006/22**

(51) Int Cl.:
*C08F 222/10* *(2006.01)* *C09D 4/00* *(2006.01)*
*C08F 2/44* *(2006.01)*

(21) Application number: **03255899.1**

(22) Date of filing: **19.09.2003**

(54) **Curable clay composition: composition, processes, and uses thereof**

Tonzusammensetzung, Verfahren und Anwendungen damit

Composition d' argile durcissable, procédés et utilisations à base de cette composition.

(84) Designated Contracting States:
**DE FR GB IT**

(30) Priority: **14.11.2002 US 426161 P**

(43) Date of publication of application:
**09.06.2004 Bulletin 2004/24**

(60) Divisional application:
**05077765.5 / 1 642 914**

(73) Proprietor: **ROHM AND HAAS COMPANY**
**Philadelphia,**
**Pennsylvania 19106-2399 (US)**

(72) Inventors:
• **Whitman, David William**
**Harleysville**
**Pennsylvania 19438 (US)**

• **Kauffman, Thomas Frederick**
**Harleysville**
**Pennsylvania 19438 (US)**

(74) Representative: **Kent, Venetia Katherine**
**Rohm and Haas (UK) Ltd.**
**European Patent Department**
**4th Floor, 22 Tudor Street**
**London EC4Y 0AY (GB)**

(56) References cited:
**EP-A- 0 439 040** **EP-A- 0 605 008**
**WO-A-91/18050** **WO-A-02/100935**
**US-A- 3 355 417**

• **PATENT ABSTRACTS OF JAPAN vol. 0183, no.**
**22 (C-1214), 20 June 1994 (1994-06-20) & JP 6**
**073043 A (TONEN CORP), 15 March 1994**
**(1994-03-15)**

**Description**

The present invention relates generally to a curable clay composition and methods for making and using the same, In particular, the present invention relates to a method of preparing cured laminates involving the use of a curable clay composition containing exfoliated clay. The cured laminates are polymer-clay nanocomposites, which are useful as coatings having improved barrier properties, such as improve resistance to the migration of oxygen, moisture, or aroma.

Laminates are used extensively in the flexible food packing industry to provide packaging that is light weight and flexible. Further, the laminates must have low permeability to oxygen and moisture in order to food freshness. Typically, food packing laminates are formed from combinations of various substrates such as polymeric films and metal foils that are bonded together by a laminating composition.

One method of preparing a laminate includes applying an ultraviolet curable composition onto a first substrate, exposing the applied ultraviolet curable composition to ultraviolet light to initiate polymerization in order to prepare a pressure sensitive adhesive, and contacting the pressure sensitive adhesive with a second substrate to provide the laminate. The ultraviolet curable composition typically require photoinitiators to promote absorption of the ultraviolet light to achieve satisfactory polymerization rates. One-drawback to this method is that the photoinitiators or fragments of the photoinitiators generated during photolysis are generally low molecular weight materials which have been attributed to affecting adversely the organoleptic qualities of the packaged food. Further, there has been and there is an ongoing need in the art for flexible food packaging that is capable of extending the shelf life of packaged food. Desired are polymerizable formulations suitable for preparing food packaging laminates. Also desired are polymerizable formulations suitable for preparing food packaging laminates having decreased permeability to oxygen or water.

The reference, Zahouily et al. "A Novel Class of Hybrid Organic/Clay UV-Curable Nanocomposite Materials", *Radtech 2002 Technical Conference Proceedings* (2002) describes the preparation of a polymer/clay nanocomposite by the ultraviolet irradiation of a formulation containing ethylenically unsaturated materials, photoinitiators, and organo-clay. The resulting polymer/clay nanocomposite are reported to have better optical clarity than a conventional composite prepared with micron sized clay particles. However, the disclosed ultraviolet curable formulation has the disadvantage of involving the use of photoinitiators to obtain photopolymerization, thus limiting the use of the disclosed formulation in the food packaging applications.

Accordingly, it is desired to provide curable formulations that are suitable for food packaging applications, such as curable formulations that polymerize in the absence of photoinitiators. Also, desired are curable formulations suitable for preparing food packaging or coatings with decreased permeability to water or oxygen. Further, methods are desired for preparing coatings or laminates suitable for food packaging in the absence of photoinitiators, or alternatively, for preparing coatings or food packaging with increased barrier properties. An improved method of preparing such formulations are also desired.

It has now been found that such improvements are obtained by methods including the preparation of films or laminates by the electron beam induced polymerization of a curable composition containing exfoliated clay.

According to the first aspect of the present invention, a method of preparing a cured laminate is provided including the steps of: applying onto a first substrate, a curable clay composition containing: a curable medium having at least one ethylenically unsaturated monomer having a molecular weight below 500 and selected from the group consisting of : allyl (meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, 1,3-butylene glycol di(meth)acrylate, 1,4-butanediol di(meth)acrylate, 1,6-hexanediol di(meth)acrylate, neopentyl glycol di(meth)acrylate, ethoxylated bisphenol A di(meth)acrylate, cyclohexane dimethanol di(meth)acrylate, dipropylene glycol di(meth)acrylate, trimethylolpropane tri(meth)acrylate, tris (2-hydroxyethyl) isocyanurate tri(meth)acrylate, pentaerythritol tri(meth)acrylate, propoxylated trimethylpropane tri(meth)acrylate, propoxylated glyceryl triacrylate, pentaerythritol tetra(meth)acrylate, and di-trimethylol propane tetraacrylate; and from 0.5 to 20 weight %, based on a total weight of the curable clay composition, of exfoliated clay platelets dispersed in the curable medium; contacting a second substrate with the curable clay composition to provide an uncured laminate, wherein the curable clay composition is in contact with the first substrate and the second substrate; and subjecting the uncured laminate to electron beam radiation to provide the cured laminate.

A second aspect of the present invention provides a method of preparing a cured laminate as described above wherein the curable clay composition is substantially free of photoinitiator.

A third aspect of the present invention provides a method of preparing a cured laminate as described above wherein the curable clay composition comprises, a curable medium containing from 40 to 98.5 weight % of at least one ethylenically unsaturated compound selected from ethylenically unsaturated monomer and ethylenically unsaturated oligomer, and from 1 to 40 weight % soluble polymer; and from 0.5 to 20 weight % exfoliated clay platelets dispersed in the curable medium; wherein all weight % are based on total weight of the curable clay composition.

A fourth aspect of the present invention relates to a method for preparing a cured laminate as described above wherein the curable clay composition comprises exfoliated clay platelets dispersed in a curable medium and is prepared by the step of providing a first mixture containing clay particles having stacks of clay platelets, and a curable medium having at least one ethylenically unsaturated compound selected from ethylenically unsaturated monomers and ethylenically Unsaturated oligomers; and processing the first mixture in a moving media mill to separate the clay platelets from the stacks to provide the exfoliated clay platelets dispersed in the curable medium.

"Glass transition temperature" or "$T_g$" as used herein, means the temperature at or above which a glassy polymer undergoes segmental motion of the polymer chain. Glass transition temperatures of a polymer are estimated by the Fox equation [*Bulletin of the American Physical Society* 1, 3 Page 123 (1956)], as follows:

$$\frac{1}{T_g} = \frac{w_1}{T_{g(1)}} + \frac{w_2}{T_{g(2)}}$$

For a copolymer, $w_1$ and $w_2$ are the weight fraction of the two co-monomers, and $T_{g(1)}$ and $T_{g(2)}$ are the glass transition temperatures, in degrees Kelvin, of the two corresponding homopolymers. For polymers containing three or more monomers, additional terms ($w_n/T_{g(n)}$) are added. The $T_g$ of a polymer phase is calculated by using the appropriate values for the glass transition temperatures of .. homopolymers, such as those found, for example, in "Polymer Handbook", edited by J. Brandrup and E. H. Immergut, Interscience Publishers. The values of $T_g$ reported herein are calculated based on the Fox equation

The use of the term "(meth)" followed by another term such as acrylate refers to both acrylates and methacrylates. For example, as used herein, the term "(meth)acrylate" refers to either acrylate or methacrylate, the term "(meth)acrylic" refers to either acrylic or methacrylic, and the term "(meth)acrylamide" refers to either acrylamide or methacrylamide

Clays are commonly provided as particles having compositions based on hydrated aluminum silicates. The dimensions of the clay particles are typically in the range from 100 nanometers (nm) to 10 microns. Certain clay particles have structures containing multiple layers or stacks of clay platelets. Under suitable conditions, the stacks of clay platelets can be partially or completely separated to individual clay platelets. As used herein, the term "exfoliated clay" refers to a clay in the form of separated clay platelets having only one dimension in the range of nanometers and the other two dimensions in a larger size range, such as 100 nanometers and greater. As used herein, the term "to exfoliate" refers to the process of separating individual platelets from a clay particle or a stack of clay platelets, wherein the clay platelets have only one dimension in the range of nanometers and the other two dimensions in a large size range, such as 100 nanometers and greater. Typical size ranges for the exfoliated clays are platelets having one dimension, referred to as the thickness, in the range of from 1 nm to 20 nm, preferably in the range of from 1.6 nm to 15 nm, and more preferably in the range of from 2 nm to 12 nm. The other two dimensions of the platelet are larger than the platelet thickness, and are typically in the range of from 50 nm to 20 microns, preferably in the range of from 75 nm to 15 microns, and more preferably in the range of from 100 nm to 10 microns.

Nanocomposites are compositions containing a dispersed material that has one or more dimensions, such as length, width, or thickness, in the nanometer size range. Polymer-clay nanocomposites typically are characterized as being one of several general types: an intercalated nanocomposite, an exfoliated nanocomposite, or combinations thereof. The term "intercalated nanocomposite" as used herein, describes a nanocomposite that is characterized by the regular insertion of the polymer in between the clay layers, wherein the individual clay platelets are not completely separated from clay particle. The term "exfoliated nanocomposite", as used herein, describes a nanocomposite wherein the clay is dispersed in a polymer matrix mostly as individual platelets having a single dimension, the thickness, in the nanometer size range. The exfoliated nanocomposite maximizes the polymer-clay interactions as the entire surface of the clay platelet is in contact with the polymer matrix. This modification often leads to the most dramatic changes in the mechanical and physical properties of the resultant polymer. In contrast, the term "conventional composite", as used herein, describes a composite in which the clay acts as a conventional filler and is not dispersed on a nanometer size scale. Conventional compositions generally do not provide the improvements in mechanical or physical properties obtained with exfoliated nanocomposites. In certain embodiments of the present invention, some portion of the clay in the polymer-clay nanocomposite optionally exists as structures larger than exfoliated or intercalated composites.

Suitable clays for preparing the curable clay composition of this invention include any natural or synthetic layered mineral capable of being exfoliated. Examples of such clays include, for example, layered silicate minerals such as smectite, phyllosilicate, montmorillonite, saponite, beidellite, montronite, hectorite, stevensite, vermiculite, kaolinite, and hallosite A preferred clay is montmorillonite. Some non-limiting examples of synthetic minerals, or synthetic phyllosilicates, include LAPONITE™ clay, which is manufactured by Laporte Industries, LTD. of Charlotte, North Carolina, madadite, and fluorohectorite. Suitable clays are commonly treated with a surface treatment, such as quaternary ammonium surfactant.

Suitable levels of exfoliated clay platelets in the curable clay composition are in the range of from 0.5 to 20 weight %, preferably in the range of from 1 to 15 weight %, and most preferably in the range of from 2 to 10 weight %, based on the weight of the curable clay composition.

The curable clay composition of this invention contains exfoliated clay dispersed in a curable medium. The curable medium contains at least one ethylenically unsaturated compound that is capable of undergoing addition polymerization to form a polymer matrix. Polymerization of the curable clay composition results in the formation of a polymer-clay nanocomposite containing exfoliated clay dispersed in a polymer matrix. The polymer-day nanocomposite is useful in a wide variety of applications including coatings and adhesives.

Ethylenically unsaturated compounds suitable as a component of the curable medium include ethylenically unsaturated monomers and ethylenically unsaturated oligomers. Ethylenically unsaturated monomers are compounds having a molecular weight below 500 and having one or more ethylenic unsaturations, such as acryloxy groups, methacryloxy groups, and 1,2-vinyl groups. Suitable ethylenically unsaturated monomers are selected from and are limited to, multiethylenically unsaturated monomers including allyl (meth)acrylate, ethylene glycol di(meth)acrylate, diethylene glycol di(meth)acrylate, triethylene glycol di(meth)acrylate, tetraethylene glycol di(meth)acrylate, polyethylene glycol di (meth)acrylate, 1,3-butylene glycol di(meth)acrylate, 1,4-butanediol di(meth)acrylate, 1,6-hexanediol di(meth)acrylate, neopentyl glycol di(meth)acrylate, ethoxylated bisphenol A di(meth)acrylate, cyclohexane dimethanol di(meth)acrylate, dipropylene glycol di(meth)acrylate, trimethylolpropane tri(meth)acrylate, tris (2-hydroxyethyl) isocyanurate tri(meth) acrylate, pentaerythritol tri(meth)acrylate, propoxylated trimethylpropane tri(meth)acrylate, propoxylated glyceryl triacrylate, pentaerythritol tetra(meth)acrylate, and di-trimethylol propane tetraacrylate. Still other suitable ethylenically unsaturated monomers include functional monomers such as carboxylic acid monomers and sulfonic acid containing monomer. Functional monomers are optionally included in the curable clay composition to improve one or more desired properties, such as providing a coating with increased adhesion to a substrate compared to a comparative coating prepared in the absence of the particular functional monomer. Examples of functional monomers include carboxylic acid monomers such as (meth)acrylic acid, itaconic acid, fumaric acid, crotonic acid, maleic acid, monomethyl itaconate, monomethyl fumarate, and monobutyl fumarate, and salts thereof; phosphorus containing monomers such as allyl phosphate, mono- or diphosphate of bis(hydroxy-methyl) fumarate or itaconate, derivatives of (meth)acrylic acid esters, such as, form example, phosphates of hydroxyalkyl(meth)acrylates including 2-hydroxyethyl (meth)acrylate, 3-hydroxypropyl (meth)acrylate, phosphonate functional monomers including vinyl phosphonic acid, allyl phosphonic acid, 2-acrylamido-2-methylpropansphosphonic acid, $\alpha$-phosphonostyrene, 2-methylacrylamido-2-methylpropanephosphonic acid, phosphoethyl (meth)acrylate; and sulfonic acid containing monomers such as 2-acrylamido-2-methyl-1-propanesulfonic acid and sodium vinyl sulfonate; and silicone containing monomers such as vinyl trimethoxy silane and methacryloxy propyl trimethoxy silane.

The ethylenically unsaturated oligomer is a low molecular weight polymer containing at least two ethylenically unsaturated functionalities. Ethylenically unsaturated functionalities include, for example, acryloxy groups, methacryloxy groups, and 1,2-vinyl groups. The ethylenically unsaturated oligomer has a number average molecular weight, $M_n$, in the range of 500 to 50,000, preferably in the range of 750 to 30,000, and more preferably in the range of 1000 to 10,000. Examples of ethylenically unsaturated oligomers suitable for use in the curable clay composition include multifunctional (meth)acrylates obtained by reaction of a (meth)acryloxy-containing compound, such as (meth)acrylic acid, (meth) acryloyl halide, or a (meth)acrylic acid ester, with various compounds, such as hydroxy-containing alkyd resins, polyester condensates, or polyether condensates. Typical examples include:

(A) Urethane (meth)acrylates obtained by reacting isocyanate groups of a polyisocyanate, such as hexamethylene diisocyanate with a hydroxyalkyl (meth)acrylate, e.g. hydroxyethyl methacrylate. Examples of polyurethane poly (meth)acrylate oligomers are disclosed in U.S. Patent No. 3,297,745.

(B) Polyether (meth)acrylates obtained by the esterification of hydroxy-terminated polyethers with (meth)acrylic acid as disclosed in U.S. Patent No. 3,380,831.

(C) Polyester having at least two (meth)acrylate groups obtained by esterifying hydroxyl groups with (meth)acrylic acid as disclosed in U.S. Patent No. 3,935,173.

(D) Multifunctional (meth)acrylates obtained by the reaction of a hydroxyalkyl (meth)acrylate, such as hydroxyethyl (meth)acrylate, with any one of: (a) dicarboxylic acids having from 4 to 15 carbon atoms, (b) polyepoxides having terminal glycidyl groups, (c) polyisocyanates having terminal reactive isocyanate groups. Multifunctional (meth) acrylates are disclosed in U.S. Patent No. 3,560,237

(E) (Meth)acrylate-terminated polyesters made from (meth)acrylic acid, a polyol having at least three hydroxyl groups, and a dicarboxylic acid as disclosed in U.S. Patent No. 3,567,494.

(F) Multifunctional (meth)acrylates obtained by the reaction of (meth)acrylic acid with at least two epoxy groups of epoxidized drying oils, such as soybean oil, linseed oil, and epoxidized corresponding drying oil fatty acid, an ester, or amide thereof, or the corresponding alcohol, containing at least two epoxy groups. Such multifunctional (meth) acrylates are disclosed in U.S. Patent No. 3,125,592.

(G) Multifunctional (meth)acrylates which are urethane or amine derivatives of the poly(meth)acrylated epoxidized drying oils, fatty acids, and epoxidized corresponding drying oil fatty acid, an eater, or amide thereof, or the corresponding alcohol, containing at least two epoxy groups. These multifunctional (meth)acrylates are obtained by the reaction of isocyanate(s) or amine(s) respectively with the poly(meth)acrylated epoxidized drying oils, fatty acids, and epoxidized corresponding drying oil fatty acid, an ester, or amide thereof, or the corresponding alcohol, containing at least two epoxy groups. The urethane and amine derivatives retain some or all of the (meth)acrylate groups and are disclosed in U.S. Patent No. 3,876,518 and U.S. Patent No. 3,878,077.

(H) Multifunctional (meth)acrylates obtained by reaction of (meth)acrylic acid by addition to the epoxy groups of aromatic bisphenol-based epoxy resins as disclosed in U.S. Patent No. 3,373,075.

(I) (Meth)acrylated polybutadienes obtained by the addition of (meth)acrylic acid to a linear vinyl polymer having pendant glycidyl groups such as oligomers of glycidyl (meth)acrylate, or of vinyl glycidyl ether or vinyl glycidyl sulfide as disclosed in U.S. Patent No. 3,530,100 or by the addition of (meth)acrylic acid to a linear vinyl polymer having pendant or terminal alcohol groups.

(J) Multifunctional (meth)acrylates derived from (meth)acrylic acid anhydride and polyepoxides as disclosed in U.S. Patent No. 3,676,398.

(K) Multifunctional (meth)acrylate urethane eaters obtained from the combining of hydroxyalkyl (meth)acrylates, a diisocyanate, and a hydroxyl functional alkyd condensate as disclosed in U.S. Patent No. 3,673,140.

(L) (Meth)acrylate terminated urethane polyesters obtained by reaction of a polycaprolactone diol or triol with an organic polyisocyanate such as diisocyanate and a hydroxyalkyl (meth)acrylate. Such products are disclosed in U.S. Patent No. 3,700,643.

(M) Urethane multifunctional (meth)acrylates obtained by reaction of a hydroxyl-containing ester of a polyol with (meth)acrylic acid and a polyisocyanate, such as those described in U.S. Patent No. 3,759,809.

The curable medium of the curable clay composition typically is formulated with one or more ethylenically unsaturated compounds selected from ethylenically unsaturated monomers, ethylenically unsaturated oligomers, or mixtures thereof. Generally, the level of ethylenically unsaturated compound in the curable clay composition is in the range of from 40 to 99.5 weight %, preferably in the range of from 45 to 85 weight % and more preferably, in the range of from 50 to 80 weight %, based on the weight of the curable clay composition. The ethylenically unsaturated monomer is often included in the curable medium in order to lower the viscosity of the curable clay composition.

The curable medium optionally contains polymer, referred to herein as "soluble polymer", which is substantially solubilized in the at least one ethylenically unsaturated compound of the curable medium. The soluble polymer is compatible with the at least one ethylenically unsaturated compound of the curable medium and preferably is used at levels that do not result in the formation of a separate soluble polymer phase. As used herein, "compatible" refers to the ability to form a uniform mixture from the components such that the components of the curable medium can be mixed, applied onto a substrate, and cured before an individual component forms a separate observable phase. A compatible blend is commonly characterized by visual clarity or having uniform flow properties. Preferably, the soluble polymer forms a homogeneous solution with the at least one ethylenically unsaturated compound and any other optional components of the curable medium. The soluble polymer is further characterized as being saturated or alternatively, as not having ethylenically unsaturated groups that react during the polymerization of the curable medium. Suitable molecular weights for the soluble polymers are in the range of greater than 25,000, preferably greater than 50,000, and more preferably, greater than 100,000. The level of soluble polymer in the curable clay composition is in the range of from 0 to 40 weight %, preferably in the range of from 1 to 40 weight %, and more preferably, in the range of from 2 to 30 weight %, based on the weight of the curable clay composition. Examples of suitable soluble polymers are thermoplastic polymers, which include addition polymers such as poly(meth)acrylates, poly(ethylene), and poly(propylene); condensation polymers such as poly(esters), poly(urethanes), and poly(ethers); and inorganic polymers such as polydheones. Preferred are linear polymers. In certain embodiments, the curable clay composition contains two or more soluble polymers that differ according to their composition or average molecular weight.

The curable clay composition optionally includes other ingredients including wetting agents, biocides, rheology modifiers, solvents, surfactants, leveling agents, antioxidants, polymerization inhibitors, chain transfer agents, colorants such as dyes, UV stabilizers, and foam control additives. Suitable optional solvents include haloalkanes such as chloroborm; ethers such as ethyl ether and tetrahydrofuran; esters such as ethyl acetate; alcohols such as isopropanol and n-butanol; alkanes such as hexane and cyclopentane; ketones such as acetone; amides such as N-methylpyrrolidone; nitriles such as acetonitrile; and aromatics such as toluene. It is preferred that the curable clay composition contains less than 5 weight % solvent, preferably less than 2 weight % solvent, and most preferably, less than 1 weight % solvent, based on the weight of the curable clay composition. In a preferred embodiment, the curable clay composition does not contain solvent.

Photoinitiators are molecules that absorb light, typically in the ultraviolet region of the electromagnetic spectra, and use the absorbed energy to initiate chemical reactions. Examples of photoinitiators are acetophencmes; benzophenones; aryldiazonium salts; diarylhalonium salts including diaryliodouium, diarylbromonium, and diarylchloronium salts with complex metal halide anions; triarylsulfonium salts; nitrobonzyl esters; sulfones; and triaryl phosphates. In a preferred embodiment, the curable clay composition is substantially free of photoinitiator. As used herein, "substantially free of photoinitiator" refers to a level of photoinitiator of less than 2 weight %, preferably less than 1 weight %, and more preferably less than 0.5 weight %, based on the weight of the curable clay composition. Most preferred is a curable clay composition having a level of zero weight % photoinitiator. Curable clay compositions that are substantially free of photoinitiators are useful in applications in which minimizing sources of smell or taste from packaging is important. Examples of such applications include coatings and laminates for food packaging.

The levels and types of the exfoliated clay, the ethylenically unsaturated compound, the optional polymer, and the other optional ingredients are typically selected to provide a curable clay composition with one or more desired properties such as viscosity or cure speed; or to provide a cured composition with one or more desired properties such as resistance to moisture or oxygen migration, adhesion to a particular substrate, or clarity.

The curable clay composition is prepared by admixing clay particles and at least one ethylenically unsaturated compound of the curable medium to provide a first mixture. Optionally, an additive for treating the surfaces of the clay particles to aid in exfoliation of the clay platelets is also added. Examples of such additives include ammonium salts of quaternary surfactants, acrylic acid, and methacrylic acid. Suitable mixing techniques include both low shear and high shearing mixing. Preferably, the clay particles are uniformly distributed in the at least one ethylenically unsaturated compound. More preferably, the clay particles are predominately dispersed in the at least one ethylenically unsaturated compound in order to minimize aggregates of clay particles Alternatively, the clay particles are first distributed or dispersed into a suitable solvent and then admixed with the at least one ethylenically unsaturated compound. Next, the first mixture is subject to shear conditions in order to exfoliate the clay particles into separate clay platelets. Additives are optionally included in the first mixture to promote separation into clay platelets or to stabilize the exfoliated clay platelets. Preferably, high shear conditions are employed such as encountered in high shear dispersators used to prepare pigment dispersions. One method of preparing the curable clay composition involves combining the step of admixing of the clay particles and the at least one ethylenically unsaturated compound, and the step of exfoliating the clay particles. In this method, the clay particles are admixed into the at least one ethylenically unsaturated compound and exfoliated in a single step to provide exfoliated clay platelets dispersed in the curable medium.

In one embodiment of the present invention, the curable clay composition is provided by preparing a first mixture by combining clay particles, which contain stacks of clay platelets, with a curable medium including at least one ethylenically unsaturated compound. Next, the first mixture is subjected to select physical conditions to separate the clay platelets from the stacks of clay platelets to provide exfoliated clay platelets dispersed in the curable medium. In this embodiment, the select physical conditions include collisionally impacting the clay particles at high shear flow conditions. The collisional impacts are achieved by processing the first mixture in the presence of moving media, such as sand, ceramic balls, or metal shot. As used herein, a moving media mill is an apparatus that processes a composition using moving media. Suitable high shear conditions for separating clay platelets from clay stacks in the moving media mill are at mixing conditions wherein the energy input is at least 0.5 watt per liter, preferably at least 1 watts per liter, and more preferably, at least 3 watts per liter. The moving media, such as the sand, polymeric particles, ceramic balls, metal oxide beads, or metal shot, collide with the clay stacks and the resulting impacts lead to breakup of the stacks into smaller stacks or separation of individual clay platelets from the stack. The moving media typically has mean diameters in the range of from 0.1 to 20 millimeter (mm), preferably in the range of from 0.1 to 3 mm, and most preferably in the range of from 0.1 to 1 mm. The particles of the moving media have various geometries including spherical, cylindrical, and irregular shapes. Examples of suitable moving media mills include, but are not limited to, bead mills, sand mills, airjet mills, roller mills, attritor mills, vibratory mills, ball mills, and planetary mills.

The first mixture contains clay particles with mean particle diameters in the size range of greater than 200 nm and greater. These clay particles have dimensions that lead to the scattering of light and the loss of transparency in the first mixture. The appearance of the first mixture containing the clay particles is often characterized as opaque or translucent, depending upon factors such as the mean particle diameter or the solids level of the clay particles. In contrast, the exfoliated clay platelets have thicknesses in the nanometer size range, typically in the range of 1 to 20 nm, and scatter light less efficiently. The curable clay composition containing the exfoliated clay platelets is typically characterized by a transparent appearance, absence the presence of other light scattering particles such as pigments or fillers.

The curable clay composition containing exfoliated clay platelets is characterized by increased transparency as the clay particles are separated in the exfoliated clay platelets, compared to the first mixture containing clay particles dispersed in the curable medium. Increased transparency indicates a decrease in the amount of clay particles, which scatter light, and an increase in the amount of exfoliated clay. Preferably, the curable clay composition is substantially to transparent visible light, which allows the use of the curable clay composition in various applications such as coatings and adhesives.

X-ray diffraction techniques are useful for characterizing the structural regularity of stacks of clay platelets, and the structural irregularity of the exfoliated clay platelets in the curable clay composition. As the clay particles have stacks of uniformly spaced clay platelets, an X-ray diffraction pattern of as formulation containing the clay particles has a diffraction peak corresponding to the spacing of the clay platelets in the clay particles. In the curable clay composition, the X-ray diffraction peak is diminished or absent indicating a decrease in the order of the clay platelets and corresponding to the presence of exfoliated clay platelets. U.S. Patent No. 5,554,670 discusses the use of X-ray diffraction techniques to monitor the degree of intercalation and exfoliation of clay particles.

The curable clay composition is polymerized by exposure to an accelerated electron beam, referred to herein as "electron beam radiation", or other ionizing radiation such as $\alpha$-radiation, $\beta$-radiation, $\gamma$-radiation, and neutron radiation. Exposure to ionizing radiation generates ions and other reactive species that initiate polymerization of the ethylenically unsaturated functionalities of the oligomer or the monomer to form the cured polymer matrix. Suitable levels of ionizing radiation to polymerize the prepolymer composition include doses in the range of 0.5 to 25 Mrad, preferably doses in the range of 0.5 to 15 Mrad, And more preferably in the range 1 to 10 Mrad. Alternatively, the curable day composition is polymerized by other methods known in the art to generate ions or reactive species such as radicals including, for example, heat activated initiators. Examples of heat activated initiators include azocompounds, t-alkyl peroxides, t-alkyl hydroperoxides, and t-alkyl peresters.

The curable clay composition is useful for preparing a coated substrate. One method of preparing a coated substrate includes the steps of preparing an uncured coated substrate by applying the curable clay composition onto a substrate; and subjecting the uncured coated substrate to a radiation source, such as electron beam radiation, $\alpha$-radiation, $\beta$-radiation, $\gamma$-radiation, or neutron radiation, to provide the coated substrate. A preferred radiation source is electron beam radiation.

Examples of suitable substrates include glass; cellulosic materials such as paper, paperboard, and cardboard; processed timber such as medium density fiber board, chip board, laminates; mineral substrates such as masonry, cement, fiber cement, cement asbestos, plaster, plasterboard, stucco, glazed and unglazed ceramic; metal substrates such as galvanized iron, galvanized steel, cold rolled steel, aluminum, wrought iron, drop forged steel, stainless steel; asphalt; leather; wallboard; nonwoven materials; and plastics such as polyethylene, polypropylene, polyethylene terephthalate, polycarbonate, acrylonitrile-butadiene-styrene (ABS), ethylene-propylene-diene rubber, polyvinyl chloride, copolymers of vinyl chloride and vinylidene chloride, copolymers of vinyl acetate with low olefins, linear polyester, polyamides, and rubber; and metal foils such as aluminum foil, tin foil, lead foil, and copper foil.

Conventional methods to apply the curable clay composition include, for example, brushing, roll coating, wire-wound rod coating, knife coating, drawdown coating, dipping, gravure application, curtain coating, slot die, and spraying methods such as, for example, air-atomized spray, air assisted spray, airless spray, high volume low pressure spray, and air-assisted airless spray.

The curable clay composition of this invention is useful for preparing laminates, such as laminates suitable for food packaging applications. One method of preparing a cured laminate includes the steps of applying the curable clay composition onto a first substrate; contacting a second substrate with the applied curable clay composition to prepare an uncured laminate; and then subjecting the uncured laminate to a select radiation type, such as electron beam radiation, $\alpha$-radiation, $\beta$-radiation, $\gamma$-radiation, or neutron radiation, to provide the cured laminate. A preferred radiation source is electron beam radiation. The cured laminate is formed from a first substrate and a second substrate of any thickness provided at least one substrate allows the passage of the select radiation type to the curable clay composition contained within the uncured laminate. Typical ranges for the thickness of a first substrate or second substrate are in the range of 5 micron to 250 micron, preferably in the range of 10 micron to 100 micron for electron beam radiation

In one embodiment, the curable clay composition is polymerized to prepare a polymerized matrix with a glass transition temperature of less than 0 °C, preferably less than 10 °C, and more preferably less than -20 °C. The curable clay composition of this embodiment is useful for preparing a pressure sensitive adhesive. One method of using this curable clay composition is to prepare a laminate according to the steps of applying the curable clay composition onto a first substrate; subjecting the first substrate having the applied curable clay composition to a radiation source, such as electron beam radiation, $\alpha$-radiation, $\beta$-radiation, $\gamma$-radiatian, or neutron radiation, to prepare a pressure sensitive adhesive layer on the first substrate; and contacting the pressure sensitive adhesive layer with a second substrate to prepare a laminate. Alternatively, the method includes the step of applying pressure during or after application of the second substrate to the pressure sensitive adhesive layer.

Suitable substrates for preparing laminates include plastics listed hereinabove and metal foils listed hereinabove.

Typically, the thickness of the applied curable clay composition is in the range of from 1.3 micron (0.05 mil) to 13 micron (0.5 mil) preferably in the range of 1.3 micron (0.05 mil) to 5.1 micron (0.2 mil) for a flexible laminate.

In one embodiment, the laminate contains at least one substrate selected from polyethylene terephthalate, polyethylene, polypropylene, and polyvinyl chloride. In a second embodiment, the laminate contains at least one substrate selected from polyethylene terephthalate, polyethylene, polypropylene, and polyvinyl chloride, wherein the substrate is untreated

In one embodiment, a method is provided for preparing a flexible, cured laminate suitable for food packaging with substrates selected from a polyethylene terephthalate substrate and an aluminum foil substrate; a polyethylene terephthalate substrate and a metallized polyethylene terephthalate substrate; polyethylene terephthalate substrate and a polyethylene substrate; an oriented polypropylene substrate and an oriented polypropylene substrate; and oriented polypropylene substrate and a polyethylene substrate. In this embodiment, curable clay composition is applied onto either substrate, prior to contacting the curable clay composition with the other substrate. The thickness of each substrate is typically 50 microns or loss.

In a second embodiment, the cured laminate includes polyethylene terephthalate as a substrate and aluminized polyethylene terephthalate as another substrate. This laminate is suitable for use as a packaging container for liquids such as juice.

In another embodiment, the cured laminate includes oriented polypropylene as the first substrate and as the second substrate. This laminate is suitable for use as dry food packaging.

In another embodiment, the cured laminate includes oriented polypropylene as a substrate and polyethylene as another substrate. This laminate is also suitable for use as dry food packaging.

In one embodiment, the cured laminate includes at least substrate which is opaque to light. In a second embodiment, both the first substrate and the second substrate of the cured laminate are opaque to light.

In one embodiment, the cured laminate is a multilayered laminate including 3 or more substrates having the cured curable clay composition in contact with the first substrate and the second substrate. Preferably, the multilayered laminate contains the cured curable clay composition interposed between each adjacent laminate layer. The preparation of the multilayered laminate typically involves a single cure step to polymerize the one or more layers of prepolymer composition. For example, a multilayered laminate containing three substrates is formed from a polyethylene terephthalate substrate bonded to an aluminum foil substrate, which is bonded to another polyethylene terephthalate substrate. This multilayered laminate is useful for food packaging such as bags for coffee

The method of preparing the cured laminate of this invention involves assembling the uncured laminate prior to the cure step. As oxygen is known in the art to inhibit the polymerization of ethylenically unsaturated monomers and oligomers, one advantage of this method is that the curable clay composition, which is interposed between the first substrate and the second substrate, is not in direct contact with atmospheric oxygen, thus minimizing the oxygen content of the curable clay composition. Generally, faster cure is obtained or a lower dosage of electron beam radiation is used compared to cure of a composition in direct contact with atmospheric oxygen.

The following examples are presented to illustrate the composition and the process of the invention. These examples are intended to aid those skilled in the art in understanding the present invention. The present invention is, however, in no way listed thereby.

Example 1

A curable clay composition and comparative curable compositions are prepared by combining the ingredients listed in Table 1.1

Table 1-1 - Compositions of Curable Clay Composition and Comparative Curable Compositions

| Ingredient | Example 1 | Comparative A | Comparative B |
|---|---|---|---|
| Ebecryl™-600 oligomer | 35 | 37 | 35 |
| trimethylolpropane | 31 | 33 | 31 |
| triacrylate | | | |
| hexanediol diacrylate | 20 | 21 | 20 |
| PEG-200 diacrylate | 9 | 9 | 9 |
| hydrophobically modified clay | 5 | - | - |
| Icecap-K™ clay | - | | 5 |

Ebecryl™-600 oligomer is a bisphenol-A epoxy diacrylate oligomer having a molecular weight of 500. Ebecryl is a trademark of UCB Chemicals, Atlanta, GA.

Icecap K is a trademark of Burgess Pigment Co., GA

The ingredients are charged to a glass jar and agitated with a mechanical stirrer. The mixture is warmed to 60°C, and 1 mm zirconium oxide beads are added until the level of the beads is just below the surface of the mixture. The resulting mixture is stirred for 1 hour to disperse the clay and then filtered through a coarse mesh to remove the beads to provide the curable clay composition.

The curable clay composition of Example 1 is coated onto oriented polypropylene film to a coat weight of 1.5 gram per meter$^2$ (1 Ib/ream). The coated sample is exposed under a 175 kV electron beam to a dose of 3 Mrad. Next, a second coat is applied at a coat weight of 1.5 gram per meter$^2$ and exposed to a dose of 3 Mrad to provide a sample having a nanocomposite coating.

Comparative cured samples are also prepared from Comparatives A and B.

The oxygen permeability of the coated samples are measured according to ASTM D3985 test method. High oxygen permeability is indicated by a rate of oxygen migration through the coated sample of greater than 2000 nanomoles per meter$^2$-sec (nmol/m$^2$-s); medium oxygen permeability is indicated by a rate in the range of from 500 to 2000 nmol/m$^2$-s; and low oxygen permeability is indicated by a rate in the range of less than 500 nmol/m$^2$-s.

The moisture permeability of the coated samples are measured according to ASTM F1249 test method. High water permeability is indicated by a rate of moisture migration through the coated sample of greater than 0.5 gram par meter$^2$ per day (g/m$^2$/d); medium moisture permeability is indicated by a rate in the range of from 0.1 to 0.5 g/m$^2$/d; and low oxygen permeability is indicated by a rate in the range of less than 0.1 g/m$^2$/d.

The properties of the coated samples are listed below.

Table 1.2

| Coating Composition | Appearance of Coated Sample | Oxygen Permeability | Moisture Permeability |
|---|---|---|---|
| Example 1 | clear | low | low |
| Comparative A | clear | high | high |
| Comparative B | opaque | medium | medium |

The results in Table 1.2 show that the curable clay composition of this invention, Example 1, which contains exfoliated clay platelets, provides a coated sample having improved barrier properties to both oxygen and moisture; as well as a transparent appearance. In contrast, the comparative composition of Comparative B, which contains clay particles that are not exfoliated, provides a comparative coated sample having increased permeability to oxygen and moisture; and has an opaque appearance. Further, the comparative composition of Comparative A, which does not contains clay particles, provides a transparent comparative coated sample with high permeability to oxygen and moisture.

**Claims**

1. A method of preparing a cured laminate comprising the steps of:

   a) applying onto a first substrate, a curable clay composition comprising:

      i) a curable medium comprising at least one ethylenically unsaturated monomer having a molecular weight below 500 and selected from the group consisting of: allyl (meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, 1,3-butylene glycol di(meth)acrylate, 1,4-butanediol di(meth)acrylate, 1,6-hexanediol di(meth)acrylate, neopentyl glycol di(meth)acrylate, ethoxylated bisphenol A di(meth)acrylate, cyclohexane dimethanol di(meth)acrylate, dipropylene glycol di(meth)acrylate, trimethylolpropane tri (meth)acrylate, tris (2-hydroxyethyl) isocyanurate tri(meth)acrylate, pentaerythritol tri(meth)acrylate, propoxylated trimethylpropane tri(meth)acrylate, propoxylated glyceryl triacrylate, pentaerythritol tetra(meth) acrylate, and di-trimethylol propane tetraacrylate; and
      ii) from 0.5 to 20 weight %, based on a total weight of said curable clay composition, of exfoliated clay platelets dispersed in said curable medium;

   b) contacting a second substrate with said curable clay composition on said first uncured coated substrate to provide an uncured laminate, wherein said curable clay composition is in contact with said first substrate and said second substrate; and
   c) subjecting said uncured laminate to electron beam radiation to provide said cured laminate.

2. A method according to Claim 1 wherein the curable clay composition is substantially free of photoinitiator.

3. A method according to any preceding claim, wherein the curable clay composition comprises:

   a) a curable medium comprising:

i) from 40 to 98.5 weight % of the at least one ethylenically unsaturated monomer; and

ii) from 1 to 40 weight % soluble polymer; and

b) from 0.5 to 20 weight % exfoliated clay platelets dispersed in said curable medium;

wherein all weight % are based on total weight of said curable clay composition.

4. A method according to any of claims 1-3 wherein the curable clay composition comprises exfoliated clay platelets dispersed in the curable medium, and is prepared by the steps of:

a) providing a first mixture comprising:

i) clay particles comprising stacks of clay platelets, and

ii) said curable medium; and

b) processing said first mixture in a moving media mill to separate said clay platelets from said stacks to provide said exfoliated clay platelets dispersed in said curable medium.

**Patentansprüche**

1. Verfahren zur Herstellung eines gehärteten Laminats, umfassend die Schritte:

a) des Aufbringens auf ein erstes Substrat einer härtbaren Tonzusammensetzung, umfassend:

i) ein härtbares Medium, umfassend mindestens ein ethylenisch ungesättigtes Monomer mit einem Molekulargewicht unterhalb 500 und ausgewählt aus der Gruppe, bestehend aus: Allyl(meth)acrylat, Ethylenglycoldi(meth)acrylat, Diethylenglycoidi(meth)acrylat, Triethylenglycoldi(meth)acrylat, Tetraethylenglycoldi(meth)acrylat, Polyethylenglycoldi(meth)acrylat, 1,3-Butylenglycoldi(meth)acrylat, 1,4-Butandioldi(meth)acrylat, 1,6-Hexandioldi(meth)acrylat, Neopentylglycoldi(meth)acrylat, ethoxyliertem Bisphenol-A-di(meth)-acrylat, Cyclohexandimethanoldi(meth)acrylat, Dipropylenglycol-di(meth)acrylat, Trimethylolpropantri(meth)acrylat, Tris(2-hydroxyethyl)isocyanurat-tri(meth)acrylat, Pentaerythrit-tri(meth)acrylat, propoxyliertem Trimethylpropantri(meth)acrylat, propoxylieriem Glyceryltriacrylat, Pentaerythrit-tetra(meth)acrylat und Di-trimethylolpropantetraacrylat, und

ii) von 0,5 bis 20 Gew.-%, bezogen auf ein Gesamtgewicht der härtbaren Tonzusammensetzung, von abgeblätterten bzw. abgeplatzten Tonblättchen, welche in dem härtbaren Medium dispergiert sind,

b) des Inkontaktbringens eines zweiten Substrates mit der härtbaren Tonzusammensetzung auf dem ersten ungehärteten Substrat, um ein ungehärtetes Laminat bereitzustellen, wobei die härtbare Tonzusammensetzung sich im Kontakt mit dem ersten Substrat und dem zweiten Substrat befindet, und

c) des Unterziehens des ungehärteten Laminates einer Elektronenstrahlbestrahlung, um das gehärtete Laminat bereitzustellen.

2. Verfahren nach Anspruch 1, wobei die härtbare Tonzusammensetzung im Wesentlichen frei von einem Photoinitiator ist.

3. Verfahren nach einem der vorhergehenden Ansprüche, wobei die härtbare Tonzusammensetzung umfasst:

a) ein härbares Medium, umfassend:

i) von 40 bis 98,5 Gew.-% des mindestens einen ethylenisch ungesättigten Monomers, und

ii) von 1 bis 40 Gew.-% an löslichem Polymer, und

b) von 0,5 bis 20 Gew.-% an abgeblätterten Tonblättchen, welche in dem härtbaren Medium dispergiert sind,

wobei alle Gew.-%-Werte auf das Gesamtgewicht der härtbaren Tonzusammensetzung bezogen sind.

4. Verfahren nach einem der Ansprüche 1 bis 3, wobei die härtbare Tonzusammensetzung abgeblätterte Tonblättchen umfasst, welche in dem härtbaren Medium dispergiert sind, und durch die Schritte:

a) des Bereitstellens eines ersten Gemisches, umfassend:

i) Tonteilchen, umfassend Stapel von Tonblättchen, und
ii) das härtbare Medium, und

b) des Verarbeitens des ersten Gemisches in einer Mühle für bewegliche Medien, um die Tonblättchen von den Stapeln zu trennen, um die abgeblätterten Tonblättchen bereitzustellen, welche in dem härtbaren Medium dispergiert sind,

hergestellt werden.

## Revendications

1. Procédé de préparation d'un stratifié durci comprenant les étapes consistant à :

a) appliquer sur un premier substrat, une composition d'argile durcissable comprenant :

i) un milieu durcissable comprenant au moins un monomère insaturé éthyléniquement ayant une masse moléculaire inférieure à 500 et choisi dans le groupe constitué par : le (méth)acrylate d'allyle, le di(méth) acrylate d'éthylèneglycol, le di(méth)acrylate de diéthylèneglycol, le di(méth)acrylate de triéthylèneglycol, le di(méth)acrylate de tétraéthylèneglycol, le di(méth)acrylate de polyéthylèneglycol, le di(méth)acrylate de 1,3-butylèneglycol, le di(méth)acrylate de 1,4-butanediol, le di(méth)acrylate de 1,6-hexanediol, le di(méth) acrylate de néopentylglycol, le di(méth)acrylate de bisphénol A éthoxylé, le di(méth)acrylate de cyclohexanediméthanol, le di(méth)acrylate de dipropylèneglycol, le tri(méth)acrylate de triméthylolpropane, le tri (méth)acrylate de tris(2-hydroxyéthyl)isocyanurate, le tri(méth)acrylate de pentaérythritol, le tri(méth)acrylate de triméthylpropane propoxylé, le triacrylate de glycéryle propoxylé, le tétra(méth)acrylate de pentaérythritol, et le tétraacrylate de ditriméthylolpropane ; et
ii) de 0,5 à 20 % en poids, rapporté au poids total de ladite composition d'argile durcissable, de plaquettes d'argile exfoliées dispersées dans ledit milieu durcissable ;

b) mettre en contact un second substrat avec ladite composition d'argile durcissable sur ledit premier substrat revêtu non durci pour fournir un stratifié non durci, dans lequel ladite composition d'argile durcissable est en contact avec ledit premier substrat et ledit second substrat ; et
c) soumettre ledit stratifié non durci à une radiation de faisceau électronique pour fournir ledit stratifié durci.

2. Procédé selon la revendication 1, dans lequel la composition d'argile durcissable est sensiblement exempte de photoinitiateur.

3. Procédé selon l'une quelconque des revendications précédentes, dans lequel la composition d'argile comprend :

a) un milieu durcissable comprenant :

i) de 40 à 98,5 % en poids du le au moins un monomère insaturé éthyléniquement ; et
ii) de 1 à 40 % en poids de polymère soluble ; et

b) de 0,5 à 20 % en poids de plaquettes d'argile exfoliées dispersées dans ledit milieu durcissable ;

dans lequel tous les % en poids sont rapportés au poids total de ladite composition d'argile durcissable.

4. Procédé selon l'une quelconque des revendications 1 à 3, dans lequel la composition d'argile durcissable comprend des plaquettes d'argile exfoliées dispersées dans le milieu durcissable, et est préparée par les étapes consistant à :

a) fournir un premier mélange comprenant :

i) des particules d'argile comprenant des empilements de plaquettes d'argile, et

ii) ledit milieu durcissable ; et

b) traiter ledit premier mélange dans un broyeur à milieux mobiles pour séparer lesdites plaquettes d'argile desdits empilements pour fournir lesdites plaquettes d'argile exfoliées dispersées dans ledit milieu durcissable.